# EUROPEAN PATENT SPECIFICATION

(11) **EP 0 909 365 B1**
(45) Date of publication and mention of the grant of the patent: **02.05.2003**
(21) Application number: 97929575.5
(22) Date of filing: 03.07.1997
(51) Int. Cl.: F03B 13/26

(54) **TIDAL CURRENT ENERGY CONVERTER**
GEZEITENSTRÖMUNGSENERGIE-UMWANDLER
CONVERTISSEUR DE L'ENERGIE DES COURANTS DE MAREE

(30) Priority: 05.07.1996 NL 1003516
(43) Date of publication of application: 21.04.1999
(73) Proprietor: Hulsbergen, Cornelis H., 8303 LG Emmeloord (NL); Steijn, Robbert C., 8332 KR Steenwijk (NL)
(72) Inventor: Hulsbergen, Cornelis H., 8303 LG Emmeloord (NL); Steijn, Robbert C., 8332 KR Steenwijk (NL)
(74) Representative: Visser-Luirink, Gesina, Dr.
(86) International application number: NL9700378
(87) International publication number: WO98001670

(56) References cited:
- WO-A-91/11614
- FR-A- 960 305
- GB-A- 2 298 004
- US-A- 4 648 745

## Description

The present invention concerns a device for gaining energy from a natural maritime tidal current, comprising a dam placed chiefly perpendicular to the direction of the current and containing one or several passages fitted with means to convert tidal energy to a useful form, electricity in particular.

In popular speech a similar device is also called tidal power station. In determining suitable locations for tidal power stations, so far nearly exclusively those estuaries are taken into consideration where extremely big water-level ranges occur in nature, amounting to eight metres or more. Such locations are extremely rare; usually the water-level ranges are considerably smaller. In the sixties the largest and best-known tidal power station was built in the estuary of the river La Rance near Saint Malo in the cast of Brittany, France. This power station comprises a closure dam closing the entire estuary with the exception of one or several well-defined passages fitted with turbines to convert the energy of the water flowing through to a useful easily transportable form, in this case being electricity. Although there are a few other estuaries in the world in which a similar dam could be installed, in the Severn, England, and the Bay of Fundy, Canada, for example, up to now the actual technical realisation has essentially been restricted to the above-mentioned French tidal power station.

Examples of tidal power stations destined primarily for use in natural or other estuaries are described in the American patent specification USP 4.464.080 and the international patent application WO 91/11614, cases in which one or several dams have been built in the estuary which comprise one or several turbines to convert the tidal energy to electricity. The latter patent application, however, also describes the ecological harm done by such stations, caused by the unnatural basin which will usually form in front of the dam and flood the adjoining land. In order to avoid these ecological drawbacks, the station referred to in the above-mentioned patent application makes use of purely kinetic energy as much as possible, reducing the water-level differences on both sides of the device.

The supply of mineral energy sources steadily decreasing and the desire to diminish CO₂ emissions growing, society's demand for sustainable alternative energy sources to form a bigger part of the energy used to meet growing energy needs is increasing. If, throughout the world, the application of tidal energy were restricted to the locations up to now considered suitable for tidal power stations, as mentioned above, only a very small part of the total amount of tidal energy available in the world could be exploited. Especially the countries situated on coasts where no exceptionally big tidal ranges occur in nature, as it is the case in most countries such as, for example, the Netherlands, could not apply this energy form at all.

The present invention is intended to provide a tidal power station which eliminates the above-mentioned drawbacks and is also suitable in particular for areas with a smaller tidal range, without losing its profitability.

In order to achieve the object in view, according to the invention, a device of the type referred to at the beginning is characterised by a dam which extends substantially traverse to the seacost and has at least one free end directed into open sea and in that only a limited part of the dam is occupied by said passages, the major part intentionally forming a barrier for the tidal stream. An essential difference between the dam in this construction and the known dams used to gain tidal energy lies in the fact that, according to the invention, the dam in the device actively interferes on a large scale, and thus noticeably, with the form and propagation of the tidal wave, with regard to the horizontal as well as the vertical tide. The length, place and alignment of the dam need to be carefully geared to this. In practice, this will for example require the length of the dam to be in proportional accordance with the local breadth of the tidal wave. That means that the dam is at least longer than approximately a quarter of that breadth, which in case of the North Sea coast of the Netherlands, for example, amounts to a length of approximately 20 km. In that case, in accordance with the invention, the form and propagation of the natural tidal wave will be noticeably affected by the dam. The water-level difference thus brought about on both sides of the dam can, for example, be used for generating electricity by means of turbines and generators to be fitted in a specific section of the dam for that purpose. Compared to the more traditional closed tidal dams in estuaries, according to the invention the device has the advantage of not causing a closed basin, so that in this regard fewer ecological drawbacks are to be expected. After all, according to the invention, the dam in the device extends on the open sea and always has a free end.

For that matter, it is noted that for example in the above-mentioned patent specification USP 4.464.080 it is proposed to apply a dam on open sea. However, the dam described does not rest on the seabed, but is a floating construction, absolutely unsuitable for affecting a tidal wave owing to its design and dimensions. This patent specification, as the above-mentioned international patent application, is about using the purely natural kinetic energy of the stream rather than creating a water-level difference of considerable size. Therefore the maximum power of such a dam is many times lower than the maximum power of the device according to the present invention as, in contrast to the present invention, for the known dam no vertical component of the tidal wave is used, let alone reinforced.

According to the invention, a special design of the device is characterised by the fact that, at the free end of the dam, a second dam has been installed, extending at an angle with the dam mentioned first. One or several of such dams installed at an angle at the free end of the primary dam reinforce the effect on the tidal wave, so that more power can be achieved.

According to the invention, in another design the device is characterised by a dam comprising a system of lockable openings, one or several, yet not all of which are equipped with above-mentioned means for converting energy. With a similar device active interference with the natural tidal wave can be increased, namely by deliberately operating the lockable openings as a function of time and place in relation to the actual course of the tidal wave. In this way, an approaching tidal wave can be transformed deliberately and in a programmed way, with regard to height as well as with regard to phasing, namely in a way which increases the amount of energy to be won considerably. The lockable openings can, for example, be fitted with flaps, slides or bellows filled with air or water, which are adjustable parts incorporated in the opening.

Furthermore, instead of a single dam, a system of a number of dams can be placed on different locations to mutually compensate peaks and lows and realise a more continuous output. According to the invention, in this respect a preferred design of the device is characterised by an additional, similar dam built substantially parallel to the dam, the distance between the first dam and the additional dam equalling approximately half of the wavelength of the tidal wave or a multiple of it. This design is based on the view that, essentially, a tidal stream has a wave-like character and that in this way, as a result of some induced oscillation of the tide, additional power is obtained from the construction. For that matter, it is noted that, within this scope, the wavelength of the tide is to be understood as a system of various normative astronomic components.

The invention will now be explained in more detail by means of a number of sample designs and an accompanying drawing, in which:
- figure 1: shows a first sample design of the device according to the invention;
- figure 2: shows a second sample design of the device according to the invention;
- figure 3: shows a third sample design of the device according to the invention;
- figure 4: shows a fourth sample design of the device according to the invention; and
- figure 5: shows a fifth sample design of the device according to the invention.

The figures are purely schematic and not drawn to scale. Notably, for purposes of clarity, some dimensions have been represented in a highly exaggerated manner. Whenever possible, corresponding parts in the figures are indicated with the same reference number.

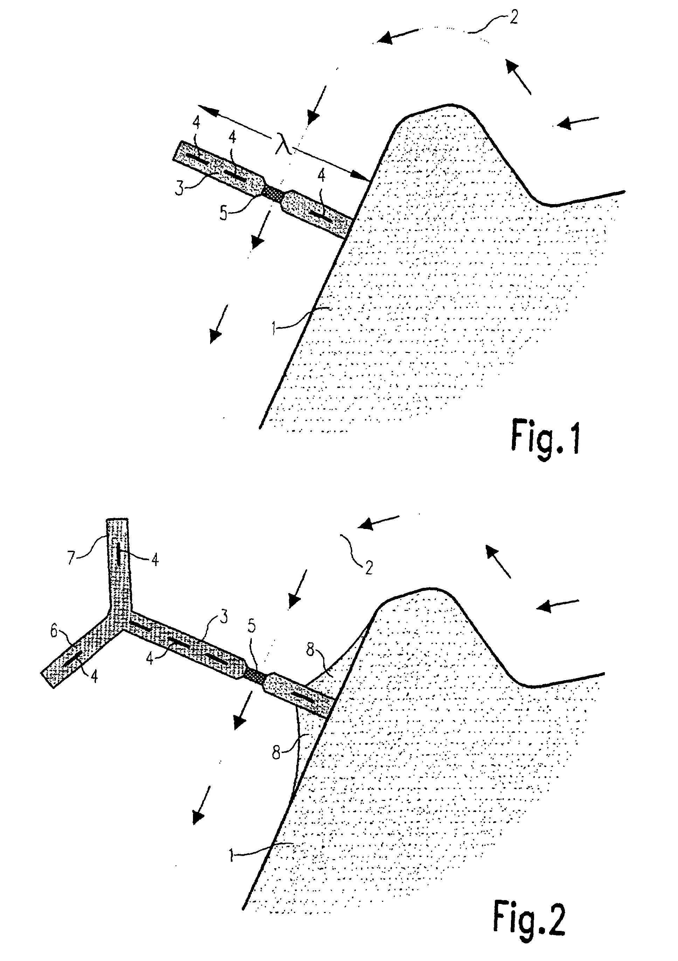

Figure 1 shows, in diagram form, part of a natural coastline 1, for example the Dutch North Sea coast. By means of a dotted line 2 and arrows 21, 22 respectively, the propagation of the coastal tidal wave and the connected tidal stream in alternating direction are indicated diagrammatically. Generally, the natural local tidal gradient along the shore 1 does not exceed 1 decimetre per kilometre and is therefore insufficient for a useful output of a traditional tidal power station. In accordance with the invention, however, a dam 3 is placed chiefly perpendicular to the coastline 1, which is designed and dimensioned in such a way that it is able to interfere actively with the natural course of the tidal stream and the form of the tidal wave. For this purpose, notably length λ of the dam is in proportional accordance with the local breadth of the tidal wave, which, along the Dutch North Sea coast, is approximately 90 kilometres wide. This example assumes a dam 3 with a total length λ of approximately 20 kilometres, which will be placed square with the coast 1 somewhere between Hook of Holland and Den Helder. The dam 3 can be constructed following the usual methods, for example using sand and/or gravel to be extracted on-site or supplied from elsewhere. The dam 3 can be strengthened externally with rocks or concrete elements if required. The dam 3 can, for example, also be built, in whole or in part, with prefabricated elements which have been manufactured for this purpose especially and are sunk on-site or installed in a different manner, making use of existing maritime driving and spouting techniques for example. It is also possible to construct the dam around a core of thus recycled elements such as tankers which have been specially adapted after being laid up. The dam can be relatively inexpensive because large parts of the dam need not be submitted to strict safety requirements. As long as the structure is not affected, some flooding and/or overtopping of waves cannot do any harm. Therefore the top level of the dam can be limited in height.

A dam 3 of similar dimensions forms an obstacle for the natural tidal wave in such a way that it is forced to alter its shape. On the basis of simulations, calculations and on-site measurements the altered course of the tidal wave can be predicted in advance. By means of gates 4, openings defined in the dam can either be closed or opened, entirely or partly, which makes it possible to control dynamically and precisely the influence of the dam on the tidal wave, for it is always changing and is affected by wind and waves. Thus with a similar dam the tide can be controlled to a large extent in order to gain a substantially bigger amount of power. The gates, to be operated dynamically, also offer an opportunity to anticipate future changes in the coastline, whether or not introduced artificially. Under the current circumstances, the tide along the Dutch coast being undisturbed, a flow of approximately half a million cubic metres per second flows through the plotted area of a dam similar to 3. In a section 5 of the dam passages will be left, for example by means of specially prefabricated caissons, in which turbines of a known device have been fitted, which are coupled to, likewise, known dynamos for generating energy. Thus from the passing water flow a useful form of energy can be won. By interfering actively with the tidal stream, according to the invention, not only is the kinetic energy of the horizontal tide, i.e. the tidal stream, exploited, but the potential energy of the vertical tide, which has been reinforced by means of the dam, is exploited as well, taking advantage of the water-level difference on both sides of the dam, which, in this example, can amount to two metres

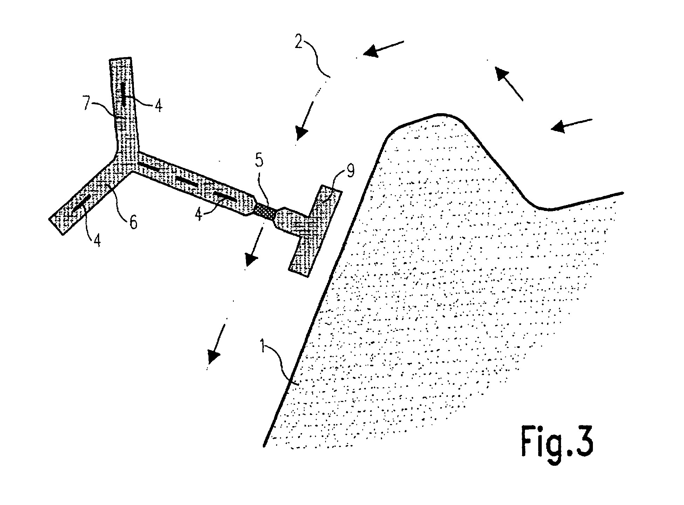

All in all, by means of the dam as described here, an effective maximum power of approximately 1500 megawatts can be reached on the Dutch North Sea coast, which means that even for coastal countries with limited natural tidal ranges tidal energy is achievable as a supplement in satisfying the national demand for sustainable energy. However, on each individual location in the world a separate study will be necessary to show the optimum size, form and position of the dam on location, dependent on the local tidal conditions, seabed conditions and, possibly, several other existing natural and socio-economic factors, such as the presence of shallows, either natural or man-made, and islands/peninsulas. In certain situations this can lead to a preference for a dam 3 not connected to the coast 1, as exemplified in figure 3, instead of a dam connected to the coast, for example because of specific requirements in the field of coastal security or on account of the presence of existing offshore islands.

A second sample design of a device according to the invention is represented in figure 2. In this case the dam 3 is equipped with two crossdams 6, 7 which, at the free end of the dam, extend in a direction chiefly perpendicular to it. The dams 6, 7 are placed symmetrically in relation to the primary dam 3, but can, for that matter, also be placed otherwise within the framework of the present sample design. Such crossdams 6, 7 increase the effect of the dam on the tidal wave, so that more output can be achieved. This effect is furthermore enhanced by adjustment of the coast at the other end of the dam 3 by means of an artificial barrier beach 8 in the form of a gradually subsiding sand and/or gravel deposit on both sides of the dam. This specially designed barrier beach will also help to prevent too radical coastline transformations. The crossdams 6, 7, too, can be equipped with a gate, bellow or any other shutter in order to be able to alter the flow through locally fitted openings and thus control dynamically and precisely the manipulation of the tidal wave.

As referred to above, instead of being connected to the coast, the dam can also be placed free-standing in the sea, as is shown in a third sample design of the device according to the invention, represented by figure 3. This can be done for socio-economic reasons, because of local tidal conditions or with a view to leaving an open passage to coastal navigation. In this sample design, too, crossdams 6, 7, 9 enhance the effect of the dam on the tidal stream.

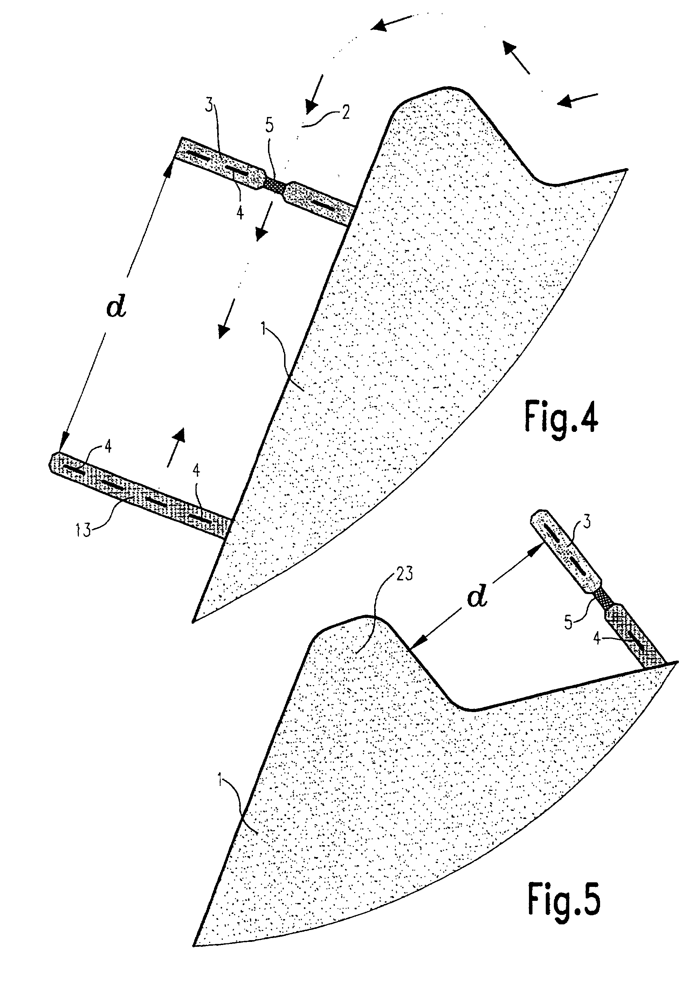

An example of a preferred design of the device according to the invention is shown in figure 4. In this case, chiefly parallel to the dam 3, a second similar dam 13 has been placed. This second dam has been built at a distance d from the first dam, equalling approximately half of the wavelength of the local tidal wave. In the case of the North Sea coast this wavelength amounts to around 600 kilometres, resulting in a distance d between both dams of approximately 300 kilometres. Given a similar distance or a multiple of it, the tidal wave will reflect between both dams 3, 13, producing an oscillation of the tidal wave between the dams. This will cause the water-level difference on both sides of the dam to increase considerably, increasing the output of the dam accordingly. For that matter, both dams do not need to be identical. As shown in this example, the section 5 with generators can be left out in the second dam. In particular, under certain circumstances the second dam 13 can be formed by part of the natural coast, as shown in figure 5 by means of a fifth sample design of the device according to the invention. In this case the natural coast includes a tongue 23 which extends in the sea perpendicular to the tidal stream. By building a dam at a distance d from the tongue 23, as indicated in the figure, in case of which this distance equals half of the wavelength of the tidal wave or a multiple of it, like in the preceding sample design, an oscillation of the tidal wave can be aroused which causes the water to be pushed up more than usual in front of the dam 3.

Although in the foregoing the invention has been described in more detail by means of only five sample designs, it will be clear that the invention is by no means limited to the examples given. On the contrary, within the scope of the invention many more variations and forms are possible. Several aspects of the sample designs given can be applied to the other sample designs. For example, an effective coastal adjustment can be profitably applied to all fixed dam constructions. Furthermore, crossdams can be applied to both of the last two sample designs in order to achieve an additional reinforcement of the effect on the tidal wave. If required, the amount of controllable openings in the dam can be increased or reduced. Such openings can even be entirely omitted if the need for precise control of the effect on the tidal wave is non-existent.

Besides, if required, a lock can be installed in the dam in order to offer a passage to the local ship traffic. However, such a lock is never strictly necessary since ships can sail around the far end of the dam. Furthermore, the dam can be used for other destinations such as:
. installing wind turbines as a supplement to often limited possibilities for installing such turbines on the land.
. landing offshore pipelines, cables and other means of transport so as to avoid landing through the surf zone or vulnerable nature reserves,
. creating a connection to an island, whether or not artificial, with the possibility to place one or more of the turbines on this island;
. storing contaminated materials, for example in a separate silt depot or in the dam body, so that storage on the land of these materials can be limited.

However, the primary benefit of the device according to the invention, too, will always be achieved: gaining tidal energy even in those places in the world where a traditional tidal power station offers insufficient possibilities for profitable exploitation.

## Claims

1. Device for gaining energy from a natural maritime tidal stream comprising a dam (3) resting on the seabed, which is placed substantially perpendicular to the direction of the tidal stream (2) and contains one or several passages (5) fitted with means to convert tidal energy to a useful form, **characterised in that** the dam extends substantially traverse to the seacoast and has at least one free end directed into open sea and **in that** only a limited part of the dam is occupied by said passages, the major part intentionally forming a barrier for the tidal stream.

2. Device according to claim 1 **characterised in that** a second dam (6,7) has been attached to the free end of the dam, extending in a direction substantially traverse to the latter.

3. Device according to claim 1 or 2, **characterised in that** one end of the dam adjoins the seacoast and that on this location the seacoast has been adjusted by means of an artificial barrier beach (8) on both sides of the dam.

4. Device according to one or several of claims 1 up to and including 3, **characterised in that** the dam comprises a system of lockable openings (4), one or several, yet not all of which are equipped with above-mentioned means for converting energy.

5. Device according to one or several of the preceding claims, **characterised in that** the device comprises an additional dam (13) substantially parallel to the first dam (3) and **in that** the additional dam is placed at a distance (d) from the first dam which equals approximately half of the wavelength (λ) of the tidal wave or a multiple of it.

6. Device according to one or several of the preceding claims, **characterised in that** a lock has been installed in the dam in order to offer a passage to the local ship traffic.

## Patentansprüche

1. Vorrichtung zur Gewinnung von Energie aus einem natürlichen maritimen Gezeitenstrom, umfassend einen Damm (3), der auf dem Meeresboden ruht, welcher im Wesentlichen senkrecht zur Richtung des Gezeitenstromes (2) angeordnet ist und einen oder mehrere Durchlässe (5) enthält, die mit Mitteln ausgestattet sind, die Gezeiten-Energie in eine nützliche Form umzuwandeln, **dadurch gekennzeichnet, dass** sich der Damm im Wesentlichen quer zur Küste erstreckt und zumindest ein freies Ende aufweist, das zur offenen See hin gerichtet ist, und dass nur ein begrenzter Teil des Damms mit diesen Durchlässen besetzt ist und der größte Teil des Damms dazu gedacht ist, eine Barriere für den Gezeitenstrom zu bilden.

2. Vorrichtung nach Anspruch 1, **dadurch gekennzeichnet, dass** ein zweiter Damm (6, 7) mit dem freien Ende des Damms verbunden ist und sich im Wesentlichen quer zum letzteren erstreckt.

3. Vorrichtung nach Anspruch 1 oder 2, **dadurch gekennzeichnet, dass** ein Ende des Damms mit der Küste verbunden ist, und dass die Küste an dieser Stelle mit einer künstlichen Strandbarriere (8) auf beiden Seiten des Damms angepaßt ist.

4. Vorrichtung nach einem oder mehreren der Ansprüche 1 bis 3, **dadurch gekennzeichnet, dass** der Damm ein System von verschließbaren Öffnungen (4) umfaßt, wobei eine oder mehrere, aber nicht alle von diesen mit den oben erwähnten Mitteln zur Umwandlung von Energie ausgestattet sind.

5. Vorrichtung nach einem oder mehreren der vorhergehenden Ansprüche, **dadurch gekennzeichnet, dass** die Vorrichtung einen zusätzlichen Damm (13) umfaßt, der im Wesentlichen parallel zum ersten Damm (3) verläuft, und dass der zusätzliche Damm in einem Abstand (d) von dem ersten Damm positioniert ist, wobei der Abstand ungefähr die Hälfte der Wellenlänge (λ) der Flutwelle oder ein Vielfaches davon beträgt.

6. Vorrichtung nach einem oder mehreren der vorgehenden Ansprüche, **dadurch gekennzeichnet, dass** in dem Damm eine Schleuse angeordnet ist, um dem örtlichen Schiffsverkehr eine Durchfahrt anzubieten.

## Revendications

1. Dispositif pour gagner de l'énergie à partir d'un courant maritime naturel provoqué par la marée comprenant un barrage (3) reposant sur le lit de la mer, qui est disposé de manière substantiellement perpendiculaire par rapport à la direction du courant de la marée (2) et contient un ou plusieurs passages (5) équipés avec des moyens destinés à convertir l'énergie de la marée en une forme utile, **caractérisé en ce que** le barrage s'étend de manière substantiellement transversale par rapport au bord de mer et possède au moins une extrémité libre dirigée vers le large et **en ce que** seule une partie limitée du barrage est occupée par ces passages, la majeure partie formant intentionnellement une barrière au courant de la marée.

2. Dispositif selon la revendication 1, **caractérisé en ce qu'**un deuxième barrage (6, 7) a été attaché à l'extrémité libre du barrage, s'étendant dans une direction substantiellement transversale par rapport à ce dernier.

3. Dispositif selon la revendication 1 ou 2, **caractérisé en ce qu'**une extrémité du barrage avoisine le bord de mer et **en ce qu'**en cet endroit le bord de mer a été adapté au moyen d'une barrière de sable artificielle (8) de chaque côté du barrage.

4. Dispositif selon l'une ou plusieurs des revendications 1 à 3 incluse, **caractérisé en ce que** le barrage comprend un système d'ouvertures fermables (4), l'une ou plusieurs de ces dernières, mais pas toutes, étant équipée(s) à l'aide des moyens ci-dessus mentionnés pour convertir l'énergie.

5. Dispositif selon l'une ou plusieurs des revendications précédentes, **caractérisé en ce que** le dispositif comprend un barrage supplémentaire (13) substantiellement parallèle au premier barrage (3) et **en ce que** le barrage supplémentaire est placé à une distance (d) du premier barrage qui équivaut approximativement à la moitié de la longueur d'onde (λ) de la vague provoquée par la marée ou d'un multiple de celle-ci.

6. Dispositif selon l'une ou plusieurs des revendications précédentes, **caractérisé en ce qu'**une fermeture a été installée dans le barrage de manière à ménager un passage au trafic local de bateaux.
